Europäisches Patentamt

European Patent Office

Office européen des brevets

(11) Veröffentlichungsnummer : **0 177 013**
**B1**

(12) **EUROPÄISCHE PATENTSCHRIFT**

(45) Veröffentlichungstag der Patentschrift :
03.01.90

(51) Int. Cl.$^5$ : **B 01 D 53/34**

(21) Anmeldenummer : 85112395.0

(22) Anmeldetag : 01.10.85

(54) Verfahren zur Wärmerückgewinnung bei der Verbrennung von organischen Chlorverbindungen.

(30) Priorität : 02.10.84 DE 3436139

(43) Veröffentlichungstag der Anmeldung :
09.04.86 Patentblatt 86/15

(45) Bekanntmachung des Hinweises auf die Patenterteilung : 03.01.90 Patentblatt 90/01

(84) Benannte Vertragsstaaten :
BE DE FR GB IT NL

(56) Entgegenhaltungen :
DE—A— 2 634 959
DE—A— 2 822 808

(73) Patentinhaber : WACKER-CHEMIE GMBH
Prinzregentenstrasse 22
D-8000 München 22 (DE)

(72) Erfinder : Dummer, Gerhard, Dipl.-Ing.
Lohnerstrasse 12
D-8269 Burgkirchen (DE)
Erfinder : Schmidhammer, Ludwig, Dr. Dipl.-Chem.
Pappelweg 5
D-8261 Haiming (DE)
Erfinder : Hirschmann, Peter, Dipl.-Ing. (FH)
Jägerweg 5
D-8263 Burghausen (DE)
Erfinder : Stettner, Gerhard, Dipl.-Ing. (FH)
Wackerstrasse 5
D-8263 Burghausen (DE)

EP 0 177 013 B1

**Beschreibung**

Die Erfindung betrifft ein Verfahren zur Rückgewinnung von Wärme aus Rauchgas, das bei der Verbrennung von organischen Chlorverbindungen bei Temperaturen von 900 bis 1 300 °C und Drücken von 0,9 bis 1,5 bar abs. anfällt, wobei das Rauchgas unter Wärmerückgewinnung abgekühlt und der anfallende Chlorwasserstoff aufbereitet wird.

Bei der großtechnischen Produktion von organischen Chlorverbindungen fallen stets gewisse Mengen solcher chlorhaltiger Verbindungen an, die am besten durch Verbrennung entsorgt werden. Der Verbrennungsprozeß wird dabei zweckmäßigerweise so geführt, daß der Chloranteil quantitativ als Chlorwasserstoff und nicht, bzw. allenfalls in Spuren, als elementares Chlor anfällt. Ferner soll ruß- und aschefrei verbrannt werden.

Bei der Prozeßführung des Verbrennungsvorgangs und der anschließenden Aufarbeitung des Rauchgases ist eine Vielzahl von chemischen Gleichgewichten zu berücksichtigen, beispielsweise das Deacon-Gleichgewicht zwischen HCl, $Cl_2$ und $O_2$, das Boudouard-Gleichgewicht, das Gleichgewicht zwischen CO, $CO_2$ und $O_2$ und andere mehr. Weiterhin müssen die bei der Aufarbeitung des chemisch aggressiven Rauchgases auftretenden Korrosionsprobleme beherrscht werden.

Es wurde deshalb in der Praxis bisher folgendermaßen verfahren : die Verbrennung erfolgte im Überschuß von Sauerstoff und zumeist unter Zusatz weiteren Brennstoffs, um einen ausreichend hohen Heizwert des Gemisches zu erreichen. Das die Brennkammer verlassende Rauchgas wurde zunächst in einem mit Wasser gekühlten Abhitzekessel auf Temperaturen von 250 bis 350 °C abgeschreckt und anschließend in einer korrosionsfesten Anlage, beispielsweise einer korrosionsfesten Quench-Vorrichtung unter seinen Taupunkt abgekühlt und einer Rauchgaswäsche unterzogen.

Die an dem beschriebenen Abhitzekessel auftretenden Korrosionsprobleme sind an sich gut beherrschbar, da bei den vorherrschenden Temperaturen das primäre Korrosionsprodukt Eisenchlorid in Magnetit umgewandelt wird, der als fest anhaftender Belag die Wandung des Abhitzekessels passiviert. Der Abhitzekessel konnte deshalb aus nicht legiertem Stahl gebaut werden.

Während nun die im Abhitzekessel an das Kühlwasser abgegebene Energie als hochgespannter Wasserdampf weiter nutzbar gemacht werden konnte, ging die noch verbleibende Energie des den Abhitzekessel verlassenden Rauchgases verloren. Es mußten zudem große Mengen an entsalztem Wasser zur Wäsche des Rauchgases verwendet werden, die zum großen Teil in Form riesiger Dampfwolken zusammen mit gewaschenem Rauchgas an die Umgebung abgegeben wurden. Eine nicht unbeträchtliche Belastung der Umwelt mußte dabei in Kauf genommen werden.

Auf eine weitere Abkühlung, ggf. unter Energierückgewinnung, der Rauchgase zwischen Abhitzekessel und Rauchgaswäsche wurde bisher verzichtet. Die Gründe hierfür seien im folgenden kurz dargestellt : die Korrosionsprobleme stellen sich im Temperaturbereich von etwa 100 bis 350 °C völlig anders dar, als am bereits beschriebenen Abhitzekessel. Das primäre Korrosionsprodukt Eisenchlorid wird bei dieser Temperatur nicht mehr in Eisenoxid verwandelt. Vielmehr sublimiert gebildetes Eisenchlorid ständig ab und legt damit freie Oberfläche für weiteren korrosiven Angriff frei. Die Anwesenheit von Eisenchlorid katalysiert zudem die Einstellung des Deacon-Gleichgewichts, mit der Folge, daß bei den vorherrschenden Temperaturen die Bildung extrem korrosiven elementaren Chlors zu erwarten war.

Andererseits wurde auf den Einbau einer korrosionsfest ausgerüsteten Kühlstufe aus Kostengründen verzichtet.

Aufgabe der Erfindung was es, einen höheren Anteil der im Rauchgas enthaltenen Energie zurückzugewinnen.

Es wurde nun gefunden, daß die zu erwartenden Korrosionsprobleme beim Einbau einer weiteren Kühlstufe zwischen Abhitzekessel und Quench-Vorrichtung beherrscht werden können, wenn die nachfolgend beschriebenen Verfahrensparameter eingehalten werden.

Gegenstand der Erfindung ist ein Verfahren zur Wärmerückgewinnung aus Rauchgas, das als Verbrennungsprodukt bei der Verbrennung von organischen Chlorverbindungen bei Temperaturen von 900 bis 1 300 °C und Drücken von 0,9 bis 1,5 bar abs. anfällt, wobei das Rauchgas unter Wärmerückgewinnung abgekühlt und der anfallende Chlorwasserstoff aufbereitet wird, wobei.

a) das Rauchgas in einer ersten Kühlstufe bei einer Kontaktzeit von 0,05 bis 0,15 sec auf eine Temperatur von 250 bis 350 °C abgekühlt wird,

b) das Rauchgas gemäß a) in einer zweiten Kühlstufe bei einer Kontaktzeit von 1,3 bis 2,0 sec auf minimal 140 °C abgekühlt wird, wobei

c) als Kühlmedium in beiden Kühlstufen Wasser verwendet wird, das die Kühlstufe b) gegenläufig zur Strömungsrichtung des Rauchgases durchfließt, mit einer Temperatur von 110 bis 140 °C in die Kühlstufe gemäß b) eingespeist wird und mit einer Temperatur von 200-220 °C der Kühlstufe gemäß a) aufgegeben wird, und

d) das Rauchgas gemäß b) in einer dritten, korrosionsfesten Kühlstufe unter seinen Taupunkt abgekühlt und mit Wasser gewaschen wird, wobei der im Rauchgas enthaltene Chlorwasserstoff als wäßrige Lösung anfällt.

2

Als zu verbrennende organische Chlorverbindungen kommen alle organischen Chlorverbindungen in Betracht, die auch bereits bisher unter Verbrennung und Wiedergewinnung von Chlorwasserstoff entsorgt werden konnten. Es sind dies insbesondere Bestandteile von Abgasen, die bei der Produktion, Aufarbeitung und Lagerung von Chlorkohlenwasserstoffen anfallen, Destillationsrückstände und dergleichen.

Die Verbrennung wird zweckmäßigerweise bei Temperaturen von 900 bis 1 300 °C und Drücken von 0,9 bis 1,5 bar abs. bei Sauerstoffüberschuß durchgeführt. Oftmals wird zum Erreichen eines ausreichend hohen Heizwertes des Gemisches zusätzlicher Brennstoff mit verfeuert. Dies kann beispielsweise in Form einer durch Brenngas gespeisten Stützflamme erfolgen.

Das die Brennkammer verlassende Rauchgas enthält als wesentliche Bestandteile Chlorwasserstoff, Wasserdampf, Kohlendioxid, Sauerstoff, Stickstoff und Spuren von Chlor und Kohlenmonoxid. Es wird zunächst in einer ersten Kühlstufe auf eine Temperaturen von 250 bis 350 °C bei einer Kontaktzeit von 0,05 bis 0,15 sec abgeschreckt. Dieser erste Wärmetauscher kann beispielsweise als Abhitzekessel in Rauchrohrkesselausführung konstruiert sein, wobei das Rauchgas durch die Rohre strömt und mantelseitig mit siedendem Wasser gekühlt wird. Aufgrund des günstigen Temperaturgradienten zwischen Rauchgas und Rohrwand kann dieser Wärmetauscher als relativ kleine, kompakte Einheit ausgelegt werden, die aus unlegiertem Stahl gefertigt werden.

Erfindungsgemäß wird nun das 250 bis 350 °C heiße Rauchgas einem zweiten Wärmetauscher zugeführt. Dieser Wärmetauscher ist so ausgelegt, daß nach einer Kontaktzeit von 1,3 bis 2,0 sec das sie zweite Kühlstufe verlassende Rauchgas noch eine Temperatur von 140 bis 160 °C aufweist. Das als Kühlmedium verwendete Wasser durchfließt den Kühler gegenläufig zur Strömungsrichtung des Rauchgases und wird mit einer Temperatur von minimal 110 °C, insbesondere 120 bis 125 °C eingespeist und erreicht am Kühleraustritt eine Temperatur von 200 bis 220 °C. Das derart vorgewärmte Wasser wird anschließend in den ersten Wärmetauscher (gemäß a)) gepumpt, wo es am Kühlmantelaustritt als hochgespannter Wasserdampf gewonnen wird. Üblicherweise wird dabei so verfahren, daß die in dieser Kühlstufe aus dem Rauchgas an das Kühlmedium abgegebene Wärme zum größten Teil in Form von Verdampfungsenergie des Wassers anfällt, wobei Wasserdampf vom Druckbereich von ca. 18 bis 21 bar abs. gewonnen wird. Dieser Wasserdampf kann in jeder geeigneten Weise, beispielsweise zur Beheizung von Destillationskolonnen und dergleichen, weiterverwendet werden.

Die zweite Kühlstufe (gemäß b)) wird nach Maßgabe der einzuhaltenden Verfahrensparameter ausgelegt. Es haben sich insbesondere kesselartige Konstruktionen bewährt, die mit berippten Kühlrohren ausgestattet sind. Das Rauchgas durchströmt dabei die Kühlvorrichtung mantelseitig, während das Kühlmedium durch die meist als Kühlschlangen ausgeformten, berippten Rohre strömt.

Bei Einhaltung der Verfahrensparameter kann diese Kühlstufe ohne spezielle korrosionsfeste Ausrüstung konstruiert werden. Beispielsweise kann diese Vorrichtung aus unlegiertem Stahl gebaut werden.

Das in der zweiten Kühlstufe auf 140 bis 160 °C abgekühlte Rauchgas wird anschließend in einer dritten Stufe einer Aufarbeitung unter Gewinnung von Salzsäure unterzogen. Die Abkühlung unter den Taupunkt des Rauchgases erfolgt am besten durch direkte Kühlung mit Wasser und ggf. mit bereits gewonnener Salzsäure, die im Kreislauf geführt wird. Diese dritte Kühlstufe kann beispielsweise in Form einer korrosionsfest ausgestatteten Quench-Vorrichtung mit nachgeschalteter Abgaswäsche gebaut sein, aus der nach intensiver Wäsche das·Rauchgas an die Umgebung abgegeben wird.

Nach dem erfindungsgemäßen Verfahren gelingt es, einen größeren Energiebetrag aus den Rauchgasen, die bei der Verbrennung chlororganischer Verbindungen anfallen, wiederzugewinnen, als dies bisher der Fall war. Es gestaltet sich ferner schon aufgrund des geringeren Volumens des Rauchgases der Kondensations-und Waschvorgang effizienter und letztlich umweltfreundlicher.

Die Erfindung wird nun anhand eines Beispiels näher erläutert:

Beispiel

In einer Brennkammer wurden bei 950 °C, 0,965 bar abs. Druck unter Zufeuerung von 450 Nm³/h Erdgas unter Zusatz von 9.500 Nm³/h Luft bei einer Verweilzeit von 1,03 sec

12.000 Nm³/h Abgase aus einer Ethylenoxichlorierung

400 Nm³/h Prozeßabgase aus der Direktchlorierung von Ethylen, der Destillation und Lagerung von 1.2-Dichlorethan

300 kg/h Leichtsieder der Bruttoformel $C_{1,35}H_{2,3}Cl_{2,3}$

900 kg/h Hochsieder der Bruttoformel $C_{2,1}H_{3,5}Cl_{3,5}$ und

1.500 Nm³/h Chlorwasserstoff, der mit 0,4 Mol-% Tetrachlorkohlenstoff und 100 Vol.-ppm. Perchlorethylen verunreinigt war,

verbrannt.

Zuzammensetzung der Ethylenoxichlorierungsabgase

2 Mol-% Chlorwasserstoff

0,5 Mol-% Kohlenmonoxid

0,7 Mol-% Kohlendioxid
0,15 Mol-% 1.2-Dichlorethan
0,25 Mol-% Ethylchlorid
0,05 Mol-% Ethylen
2,0 Mol-% Sauerstoff
94,35 Mol-% Stickstoff + Argon

Zusammensetzung der Prozeßabgase aus der Direktchlorierung von Ethylen

2 Mol-% Chlorwasserstoff
2 Mol-% 1.2-Dichlorethan
2 Mol-% Ethylchlorid
4 Mol-% Vinylchlorid
5 Mol-% Sauerstoff
2 Mol-% Ethylen
83 Mol-% Stickstoff

Die Brennkammer verließen mit einer Temperatur von 950 °C 24.348 Nm³ Rauchgas der folgenden Zusammensetzung

9,4 Mol-% Chlorwasserstoff
4,2 Mol-% Wasserdampf
4,7 Mol-% Kohlendioxid
3,0 Mol-% Sauerstoff
78,7 Mol-% Stickstoff
200 Vol.-ppm. Chlor
< 10 Vol.-ppm. Kohlenmonoxid

Das Rauchgas wurde in einen Abhitzekessel geleitet, wo es bei einer Verweilzeit von 0,15 sec auf 320 °C abgekühlt wurde. Das aus dem Abhitzekessel austretende Rauchgas wurde anschließend in einen zweiten Wärmetauscher eingeleitet, der mit berippten Kühlschlangen ausgerüstet war, wo es bei einer Kontaktzeit von 1,67 sec auf 150 °C abgekühlt wurde. Das aus dem 2. Wärmetauscher austretende Rauchgas strömte schließlich in eine Quench-Vorrichtung, wo es auf eine Taugrenztemperatur von 52 °C abgekühlt wurde.

Die Rauchgasmenge am Kaminaustritt hinter der Wäsche betrug schließlich 28.300 Nm³/h.

Der 2. Wärmetauscher wurde mit 12,3 m³/h Wasser gespeist, das eine Temperatur von 120 °C aufwies und mit einem Druck von 20,5 bar eingepumpt wurde. Am Austritt des Kesselspeisewasservorwärmers betrug die Temperatur des Kühlwassers 213 °C. Mit dieser Temperatur wurde das Wasser mit einem Druck von 20 bar zum Abhitzekessel gepumpt. Schließlich fielen am Kühlmittelaustritt des Abhitzekessels 12,3 t/h Wasserdampf unter einem Druck von 19 bar abs. an. Die erzeugte Dampfmenge wurde an das Werknetz abgegeben.

Nach einjährigem Betrieb konnten im Bereich des 2. Wärmetauschers noch keinerlei Anzeichen von Korrosion oder Verschmutzung der Rohrrippen festgestellt werden.

Vergleichsbeispiel

Es wurde die Arbeitsweise gemäß Beispiel wiederholt, mit der Abänderung, daß auf eine zusätzliche Kühlstufe zwischen Abhitzekessel und Quench-Vorrichtung verzichtet wurde. Die gleiche Menge Rauchgas mit der gleichen Zusammensetzung wurde ebenfalls im Abhitzekessel abgeschreckt. Der Abhitzekessel wurde mit Kühlwasser beaufschlagt, das jedoch nur 120 °C aufwies, da der 2. Wärmetauscher fehlte.

Die Dampferzeugung ging unter Verlust von 3 t/h gegenüber der Arbeitsweise gemäß Beispiel auf 9,3 t/h zurück. Außerdem gelangte das Rauchgas mit einer Temperatur von 320 °C zur Quench-Vorrichtung, wo es auf eine Taugrenztemperatur von etwa 67 °C abgekühlt wurde. Durch die höhere Taugrenztemperatur wurden ca. 40 % mehr Wasser verdampft, wodurch die Rauchgasmenge am Kaminaustritt nach der Wäsche auf 31.500 Nm³/h anstieg.

**Patentanspruch**

Verfahren zur Wärmerückgewinnung aus Rauchgas, das als Verbrennungsprodukt bei der Verbrennung von organischen Chlorverbindungen bei Temperaturen von 900 bis 1 300 °C und Drücken von 0,9 bis 1,5 bar abs. anfällt, wobei das Rauchgas unter Wärmerückgewinnung abgekühlt und der anfallende Chlorwasserstoff aufbereitet wird, wobei

4

a) das Rauchgas in einer ersten Kühlstufe bei einer Kontaktzeit von 0,05 bis 0,15 sec auf eine Temperatur von 250 bis 350 °C abgekühlt wird,

b) das Rauchgas gemäß a) in einer zweiten Kühlstufe bei einer Kontaktzeit von 1,3 bis 2,0 sec auf minimal 140 °C abgekühlt wird, wobei

c) als Kühlmedium in beiden Kühlstufen Wasser verwendet wird, das die Kühlstufe b) gegenläufig zur Strömungsrichtung des Rauchgases durchfließt, mit einer Temperatur von 110 bis 140 °C in die Kühlstufe gemäß b) eingespeist wird und mit einer Temperatur von 200-220 °C der Kühlstufe gemäß a) aufgegeben wird, und

d) das Rauchgas gemäß b) in einer dritten, korrosionsfesten Kühlstufe unter seinen Taupunkt abgekühlt und mit Wasser gewaschen wird, wobei der im Rauchgas enthaltene Chlorwasserstoff als wäßrige Lösung anfällt.

## Claim

Process for heat recuperation from flue gas arising as combustion product in the combustion of organic chlorine compounds at temperatures of 900 to 1 300 °C and pressures of 0.9 to 1.5 bar absolute, the flue gas being cooled with heat recuperation and the resulting hydrogen chloride being processed, wherein

a) the flue gas is cooled in the first cooling stage at a contact time of 0.05 to 0.15 second to a temperature of 250 to 350 °C,

b) the flue gas according to a) is cooled in a second cooling stage at a contact time of 1.3 to 2.0 seconds to a minimum of 140 °C,

c) the cooling medium used in both cooling stages being water which flows through cooling stage b) in counter-current to the direction of flow of the flue gas, is fed to the cooling stage according to b) at a temperature of 110 to 140 °C and is charged at a temperature of 200-220 °C to the cooling stage according to a), and

d) the flue gas according to b) is cooled in a third, corrosion-resistant cooling stage to a temperature below its dew point and washed with water, the hydrogen chloride contained in the flue gas being obtained as an aqueous solution.

## Revendication

Procédé pour récupérer la chaleur de gaz de fumée, que l'on obtient comme produit de combustion lors de la combustion de composés organiques chlorés, effectuée à des températures de 900 à 1 300 °C sous des pressions absolues de 0,9 à 1,5 bar, le gaz de fumée étant refroidi avec récupération de chaleur et le chlorure d'hydrogène obtenu étant soumis à traitement de préparation, procédé dans lequel :

a) le gaz de fumée est refroidi, dans une première étape de refroidissement, en un temps de contact de 0,05 à 0,15 seconde, à une température de 250 à 350 °C,

b) le gaz de fumée obtenu selon a) est refroidi dans une seconde étape de refroidissement, en un temps de contact de 1,3 à 2,0 secondes, jusqu'à une température minimale de 140 °C, et

c) on utilise comme fluide de refroidissement dans les deux étapes de l'eau, qui, dans l'étape b) de refroidissement, circule à contre-courant du sens d'écoulement du gaz de fumée, que l'on introduit à une température de 110 à 140 °C dans l'étape de refroidissement selon b) et qui sort de l'étape de refroidissement selon a), à une température de 200 à 220 °C, et

d) dans un troisième étage pouvant bien résister à la corrosion, on refroidit au-dessous de son point de rosée et on lave à l'eau le gaz de fumée obtenu selon b), en obtenant sous forme d'une solution aqueuse le chlorure d'hydrogène contenu dans le gaz de fumée.